# EUROPÄISCHE PATENTSCHRIFT

(11) **EP 3 760 329 B1**
(45) Veröffentlichungstag und Bekanntmachung des Hinweises auf die Patenterteilung: **16.10.2024**
(21) Anmeldenummer: 20178598.7
(22) Anmeldetag: 05.06.2020
(51) Int. Cl.: B21D 15/06, B21C 37/20, B21C 37/28, B21D 17/02, B21D 31/06

(54) **VERFAHREN ZUR HERSTELLUNG EINES SCHLAUCHNIPPELS**
METHOD FOR PRODUCING A CONNECTING NIPPLE
PROCÉDÉ POUR FABRICATION D'UN RACCORD DE TUYAU

(30) Priorität: 05.07.2019 DE 102019209918
(43) Veröffentlichungstag der Anmeldung: 06.01.2021
(73) Patentinhaber: ContiTech Techno-Chemie GmbH, 61184 Karben (DE)
(72) Erfinder: von Hammerstein, Mattias, 30419 Hannover (DE); Hübl, Stefan, 30419 Hannover (DE); Kositza, Eugen, 30419 Hannover (DE); Görz, Marvin, 30419 Hannover (DE)
(74) Vertreter: Continental Corporation

(56) Entgegenhaltungen:
- EP-A1- 2 469 142
- EP-B1- 2 469 142
- DE-A1- 19 941 577
- DE-B- 1 272 866
- FR-A1- 2 332 476
- JP-A- 2016 022 490
- US-A- 4 330 142

## Beschreibung

Die Erfindung betrifft ein Herstellverfahren für profilierte Schlauchnippel.

Schlauchnippel dienen in der Fluidtechnik meistens zum Aufstecken einer flexiblen Fluidleitung, beispielsweise eines Gummischlauchs. Da die Fluidleitung auf dem Schlauchnippel fixiert werden muss, weisen derartige Schlauchnippel ein Außenprofil auf, sodass beispielsweise bei einer Verpressung der Fluidleitung auf dem Schlauchnippel sich das Außenprofil in das Material der Fluidleitung eindrücken lässt, so das eine dichte, gegen Abrutschen der Fluidleitung vom Schlauchnippel gesicherte Verbindung der Fluidleitung auf dem Schlauchnippel gewährleistet ist.

Durch immer höhere Anforderungen an die Dichtigkeit der Verbindungen zwischen Schlauch und Nippel ist eine hohe Genauigkeit und Festigkeit der Nippel gefordert.

Die Herstellung der Schlauchnippel kann auf verschiedene Weise erfolgen. Beispielsweise ist die Erzeugung des Nippelprofils durch Drehen, Schleifen, Rollieren, Hämmern oder Einpressen möglich. Außerdem können vorgefertigte Nippel auch an Rohrleitungen angeschweißt werden, was aber mit relativ hohem Aufwand verbunden ist und die Gefahr von Undichtigkeiten mit sich bringt.

Die spanende Bearbeitung bringt den Nachteil mit sich, dass dabei Späne entstehen können, die sorgfältig entfernt werden oder die Teile entsorgt werden müssen. Das Rollieren und Hämmern ist zwar ein spanloses Verfahren, das Ergebnis ist jedoch nicht immer genau genug. Außerdem ist eine damit verbundene Durchmesserverringerung nicht immer tolerierbar.

Die WO 1986 00 68 13 A1 zeigt ein Verfahren, bei dem ein Rohrleitungsende durch eine kaltumformende Durchmesserreduzierung in eine vorgesehene profilierte Form verformt wird. Neben der Gefahr, dass bei diesem Verfahren Grate entstehen, kommt hier noch nachteilig hinzu, dass dabei der Durchmesser der Rohrleitung im Bereich des Nippels reduziert wird. Dies führt zu einem geringeren Durchfluss im Bereich des Nippels, so dass gegebenenfalls die gesamte Rohrleitung größer ausgelegt werden muss. Weitere Herstellverfahren für profilierte Schlauchnippel sind in JP2016022490A, US4330142A und FR2332476A offenbart.

Der Erfindung lag die Aufgabe zugrunde, ein Verfahren zu schaffen, mithilfe dessen Schlauchnippel der eingangs geschilderten Art unter Vermeidung der genannten Nachteile und ohne Durchmesserverringerung einfach herstellbar sind.

Diese Aufgabe wird dadurch gelöst, dass das Verfahren folgende Arbeitsschritte aufweist, nämlich
- Bereitstellung eines Vorwerkzeuges, aufweisend einen Umformstempel eine Stauchhülse und eine Rohrhalterung,
- Einlegen eines Rohrabschnittes in die Rohrhalterung,
- Einführen des Umformstempels in das Innere des Rohrabschnitts,
- Aufschieben der Stauchhülse auf den Rohrabschnitt mit eingeschobenem Umformstempel, wobei die Stauchhülse einen vorbestimmten geringeren Innendurchmesser aufweist, als der Rohrabschnitt, wobei beim Aufschieben der Stauchhülse der Rohrabschnitt einerseits axial gestaucht, andererseits radial im Durchmesser auf ein vorbestimmtes Maß verringert wird, dabei Ausbildung eines Fassungsbundes an dem Rohrabschnitt,
- Zurückziehen des Umformstempels durch den in der Stauchhülse befindlichen Teil des Rohrabschnitts, dabei Aufweitung des Innendurchmessers des Rohrabschnitts um ein vorbestimmtes, durch ein vorgewähltes Verhältnis von Ursprungsinnendurchmesser des Rohrabschnitts und Außendurchmesser des Umformstempels gegebenes Maß, wodurch die Wandstärke des Rohrabschnitts im Bereich der Stauchhülse verringert wird,
- Entnehmen des Rohrabschnitts aus der Stauchhülse,
- Aufschieben des Rohrabschnitts auf einen Stützdorn mit vorbestimmtem Durchmesser,
- Bereitstellung eines Hämmerwerkzeugs und Hämmern des Rohrabschnitts, dabei Ausbildung einer vorbestimmten Außenkontur des Rohrabschnitts,
- Entnehmen des Fertigteils aus dem Werkzeug.

Dieses Verfahren ermöglicht eine hochpräzise Herstellung von gattungsgemäßen Schlauchnippeln. Durch die Reduzierung der Wandstärke des Rohrabschnitts bei gleichzeitig vorkalibriertem Innen- und Außendurchmesser ist eine Verfestigung des Materials des Rohrabschnitts erreichbar. Damit sind mittels des erfindungsgemäßen Verfahrens hochfeste Schlauchnippel erzeugbar.

Das gesamte Verfahren ist, bis auf das Entgraten an der Nippelspitze, nahezu spanlos. Auf den kritischen Außenflächen des Nippels sind keine Formgrate vorhanden. Derartig erzeugte Schlauchnippel haben in entsprechenden Testläufen ihre hohe Druckfestigkeit und Dichtigkeit bei hoher Dauerfestigkeit bewiesen.

Anhand der Zeichnung wird nachstehend ein Beispiel der Erfindung näher erläutert. Es zeigt
Fig. 1 einen vorgeformten Rohrabschnitt in einem Teillängsschnitt,
Fig. 2 einen fertig ausgeformten Schlauchnippel.

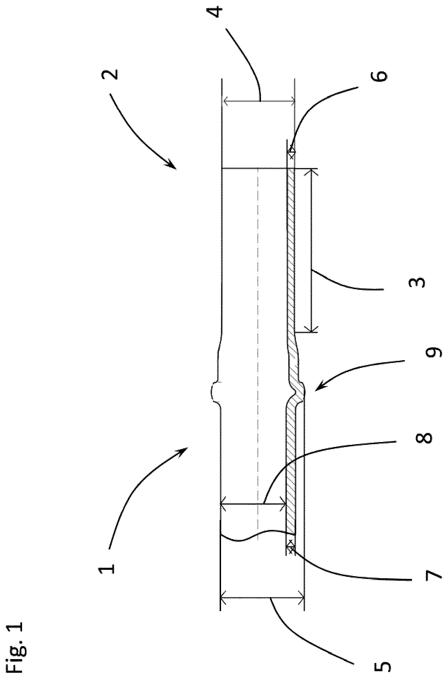

Die Fig. 1 zeigt einen vorgeformten Rohrabschnitt 1 in einem Teillängsschnitt. An seinem ersten Ende 2 weist der Rohrabschnitt 1 einen Bereich 3 auf, bei dem durch ein vorhergehendes Aufschieben einer hier nicht gezeigten Stauchhülse der Außendurchmesser 4 des Rohrabschnitts 1 gegenüber dem Außendurchmesser 5 des restlichen Rohrabschnitts sowie die Wandstärke 6 im Abschnitt 3 gegenüber der Wandstärke 7 des übrigen Rohrabschnitts 1 reduziert ist.

Durch das Aufschieben der nicht gezeigten Hülse ist außerdem ein Fassungsbund 9 angestaucht worden.

Der Innendurchmesser 8 des Rohrabschnitts 1 wurde im Bereich 3 durch die nicht gezeigte Stauchhülse zunächst ebenfalls reduziert, durch das kalibrieren mit einem nicht gezeigten Umformstempel nach dem Stauraum wieder auf ein vorbestimmtes Maß aufgeweitet. Durch das Zusammenwirken von Stauchhülse und Umformwerkzeugs, beide nicht gezeigt, ist die dargestellte Geometrie des Rohrabschnitts 1 im Abschnitt 3 mit definiertem Innendurchmesser 8, Außendurchmesser 4 und Wandstärke 6 hochpräzise herstellbar. Damit sind die Voraussetzung für einen nachfolgenden Hämmervorgang gegeben.

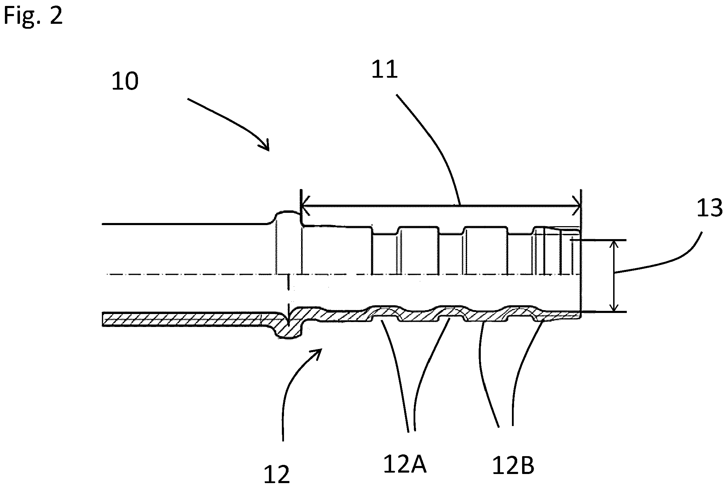

In Fig. 2 ist ein fertig ausgebildeter Schlauchnippel 10 gezeigt, der mit dem erfindungsgemäßen Verfahren hergestellt wurde. Zugrunde liegt ein vorgefertigter Rohling, wie er in Fig. 1 dargestellt ist.

Der Schlauchnippel 10 weist in einem etwa mit dem aus der Fig. 1 bereits vorgefertigten Bereich 3 korrespondierenden Bereich 11 ein Profil 12 auf, welches Profilnuten 12 A und Profilstege 12 B aufweist. Dieses Profil 12 ist durch einen Hämmerprozess erzeugt worden, welcher an sich bekannt und hier nicht dargestellt ist.

Damit beim Hämmern der Innendurchmesser 13 im Bereich 11 nicht unter einen vorgegebenen Wert sinkt, erfolgt der Hämmerprozess auf einem hier nicht gezeigten, in das Innere des Schlauchnippels 10 eingeschobenen Dorn.

Durch den erfindungsgemäßen Fertigungsprozess entsteht ein hochpräziser Schlauchnippel mit sehr guter Festigkeit, der ohne Löten oder Schweißen direkt aus einem Rohrabschnitt herstellbar ist.

### Bezugszeichenliste (Teil der Beschreibung)

- 1: vorgeformter Rohrabschnitt
- 2: erstes Ende des vorgeformten Rohrabschnitts 1
- 3: umgeformter Bereich des Rohrabschnitts 1
- 4: Außendurchmesser des Rohrabschnitts 1 im Bereich 3
- 5: Außendurchmesser des Rohrabschnitts 1 außerhalb des Bereichs 3
- 6: Wandstärke des Rohrabschnitts 1 im Bereich 3
- 7: Wandstärke des Rohrabschnitts 1 außerhalb des Bereichs 3
- 8: Innendurchmesser des Rohrabschnitts 1
- 9: Fassungsbund des Rohrabschnitts 1
- 10: Schlauchnippel
- 11: profilierter Bereich des Schlauchnippels 10
- 12: im Bereich 11 des Schlauchnippels 10
- 12A: Profilnuten des Profils 12
- 12B: Profilstege des Profils 12
- 13: Innendurchmesser des Schlauchnippels im Bereich 11

## Patentansprüche

1. Herstellverfahren für profilierte Schlauchnippel (10), **dadurch gekennzeichnet, dass** das Verfahren folgende Arbeitsschritte aufweist, nämlich
- Bereitstellung eines Vorwerkzeuges, aufweisend einen Umformstempel, eine Stauchhülse und eine Rohrhalterung,
- Einlegen eines Rohrabschnittes (1) in die Rohrhalterung,
- Einführen des Umformstempels in das Innere des Rohrabschnitts (1),
- Aufschieben der Stauchhülse auf den Rohrabschnitt (1) mit eingeschobenem Umformstempel, wobei die Stauchhülse einen vorbestimmten geringeren Innendurchmesser (4) aufweist als der Rohrabschnitt (1), wobei beim Aufschieben der Stauchhülse der Rohrabschnitt (1) einerseits axial gestaucht, andererseits radial im Durchmesser auf ein vorbestimmtes Maß (4) verringert wird, dabei Ausbildung eines Fassungsbundes (9) an dem Rohrabschnitt (1),
- Zurückziehen des Umformstempels durch den in der Stauchhülse befindlichen Teil (3) des Rohrabschnitts (1), dabei Aufweitung des Innendurchmessers (8) des Rohrabschnitts (1) um ein vorbestimmtes, durch ein vorgewähltes Verhältnis von Ursprungsinnendurchmesser (8) des Rohrabschnitts (1) und Außendurchmesser des Umformstempels gegebenes Maß, wodurch die Wandstärke (6) des Rohrabschnitts (1) im Bereich (3) der Stauchhülse verringert wird,
- Entnehmen des Rohrabschnitts (1) aus der Stauchhülse,
- Aufschieben des Rohrabschnitts (1) auf einen Stützdorn mit vorbestimmtem Durchmesser,
- Bereitstellung eines Hämmerwerkzeugs und Hämmern des Rohrabschnitts (1), dabei Ausbildung einer vorbestimmten Außenkontur (12) des Rohrabschnitts (1),
- Entnehmen des Fertigteils (10) aus dem Werkzeug.

## Claims

1. Production method for profiled hose nipples (10), **characterized in that** the method comprises the following operative steps:
- providing a preliminary tool having a forming die, a compression sleeve and a tube holder;
- placing a tubular portion (1) into the tube holder;
- introducing the forming die into the interior of the tubular portion (1);
- pushing the compression sleeve onto the tubular portion (1) having the inserted forming die, wherein the compression sleeve has a predetermined smaller internal diameter (4) than the tubular portion (1), wherein - when pushing on the compression sleeve - the tubular portion (1) is axially compressed, on the one hand, and in terms of the diameter is radially reduced to a predetermined dimension (4), on the other hand, while forming an enclosure collar (9) on the tubular portion (1);
- retracting the forming die through that part (3) of the tubular portion (1) that is located in the compression sleeve, while enlarging the internal diameter (8) of the tubular portion (1) by a predetermined dimension which is defined by a preselected ratio of original internal diameter (8) of the tubular portion (1) and external diameter of the forming die, as a result of which the wall thickness (6) of the tubular portion (1) in the region (3) of the compression sleeve is reduced;
- retrieving the tubular portion (1) from the compression sleeve;
- pushing the tubular portion (1) onto a supporting mandrel having a predetermined diameter;
- providing a hammering tool and hammering the tubular portion (1) while forming a predetermined external contour (12) of the tubular portion (1); and
- retrieving the finished part (10) from the tool.

## Revendications

1. Procédé de fabrication de raccords pour tuyau profilés (10), **caractérisé en ce que** le procédé présente les étapes de travail suivantes, consistant à
- fournir un outil avant présentant un poinçon de formage, une douille de refoulement et un support de tuyau,
- placer une section de tuyau (1) dans le support de tuyau,
- introduire le poinçon de formage à l'intérieur de la section de tuyau (1),
- emmancher la douille de refoulement sur la section de tuyau (1) avec le poinçon de formage inséré, dans lequel la douille de refoulement présente un diamètre intérieur (4) prédéterminé inférieur à celui de la section de tuyau (1), dans lequel lors de l'emmanchement de la douille de refoulement, la section de tuyau (1) est d'une part refoulée axialement, et est d'autre part radialement diminuée en diamètre jusqu'à une dimension prédéterminée (4), tout en réalisant un rebord de sertissage (9) au niveau de la section de tuyau (1),
- retirer le poinçon de formage à travers la partie (3) de la section de tuyau (1) se trouvant dans la douille de refoulement, tout en élargissant le diamètre intérieur (8) de la section de tuyau (1) d'une dimension prédéterminée donnée par un rapport présélectionné entre le diamètre intérieur d'origine (8) de la section de tuyau (1) et le diamètre extérieur du poinçon de formage de sorte que l'épaisseur de paroi (6) de la section de tuyau (1) est diminué dans la zone (3) de la douille de refoulement,
- enlever la section de tuyau (1) de la douille de refoulement,
- emmancher la section de tuyau (1) sur un mandrin de support d'un diamètre prédéterminé,
- fournir un outil de martelage, et marteler la section de tuyau (1), tout en réalisant un contour extérieur prédéterminé (12) de la section de tuyau (1),
- enlever la pièce finie (10) de l'outil.
